# EUROPEAN PATENT APPLICATION

(11) **EP 4 835 405 A1**
(43) Date of publication of application: **04.11.2026**
(21) Application number: 26153260.0
(22) Date of filing: 21.01.2026
(51) Int. Cl.: G01C 19/5684, G01C 19/5783, G01P 15/125

(54) **SENSOR AND ELECTRONIC DEVICE**

(30) Priority: 28.04.2025 JP 2025074560
(71) Applicant: KABUSHIKI KAISHA TOSHIBA, Kawasaki-shi, Kanagawa 212-0013 (JP)
(72) Inventor: MURASE, Hideaki, Kawasaki-shi 212-0013 (JP); ONO, Daiki, Kawasaki-shi 212-0013 (JP); MIYAZAKI, Fumito, Kawasaki-shi 212-0013 (JP); TOMIZAWA, Yasushi, Kawasaki-shi 212-0013 (JP)
(74) Representative: Marks & Clerk LLP

(57) **Abstract**

According to one embodiment, a sensor includes a first structure, an element section, and a first fixing member. The first structure includes a first member region. The element section includes a base including a first base face, a fixed portion fixed to the first base face, a movable portion, and a fixed electrode. The movable portion includes a first annular portion provided around the fixed portion in a first plane along the first base face. The fixed electrode is fixed to the first base face and faces the movable portion. The first fixing member fixes the base to the first member region. The first fixing member is between the first member region and the base. The first fixing member overlaps the fixed portion in a stacking direction from the first member region to the base. The first fixing member does not overlap the movable portion in the stacking direction.

## Description

### FIELD

Embodiments described herein relate generally to a sensor and an electronic device.

### BACKGROUND

For example, there is a sensor using a MEMS (Micro Electro Mechanical Systems) element, etc. In the sensors, improvement of characteristics is desired.

### BRIEF DESCRIPTION OF THE DRAWINGS

FIGS. 1A and 1B are schematic views illustrating a sensor according to a first embodiment;
FIGS. 2A and 2B are schematic diagrams illustrating a part of the sensor according to the first embodiment;
FIGS. 3A and 3B are schematic diagrams illustrating the operation of the sensor according to the first embodiment;
FIG. 4 is a schematic plan view illustrating a part of a sensor according to the first embodiment;
FIG. 5 is a schematic plan view illustrating a part of a sensor according to the first embodiment;
FIG. 6 is a schematic plan view illustrating a sensor according to the first embodiment;
FIG. 7 is a schematic diagram illustrating an electronic device according to a second embodiment;
FIGS. 8A to 8G are schematic diagrams illustrating applications of the electronic device according to the embodiment; and
FIGS. 9A and 9B are schematic diagrams illustrating applications of the sensor according to the embodiment.

### DETAILED DESCRIPTION

According to one embodiment, a sensor includes a first structure, an element section, and a first fixing member. The first structure includes a first member region. The element section includes a base including a first base face, a fixed portion fixed to the first base face, a movable portion supported by the fixed portion, and a fixed electrode. A first gap is provided between the first base face and the movable portion. The movable portion includes a first annular portion provided around the fixed portion in a first plane along the first base face. The fixed electrode is fixed to the first base face and faces the movable portion. The first fixing member fixes the base to the first member region. The base is between the first member region and the fixed portion. The first fixing member is between the first member region and the base. The first fixing member overlaps the fixed portion in a stacking direction from the first member region to the base. The first fixing member does not overlap the movable portion in the stacking direction.

Various embodiments are described below with reference to the accompanying drawings.

The drawings are schematic and conceptual; and the relationships between the thickness and width of portions, the proportions of sizes among portions, etc., are not necessarily the same as the actual values. The dimensions and proportions may be illustrated differently among drawings, even for identical portions.

In the specification and drawings, components similar to those described previously or illustrated in an antecedent drawing are marked with like reference numerals, and a detailed description is omitted as appropriate.

### (First Embodiment)

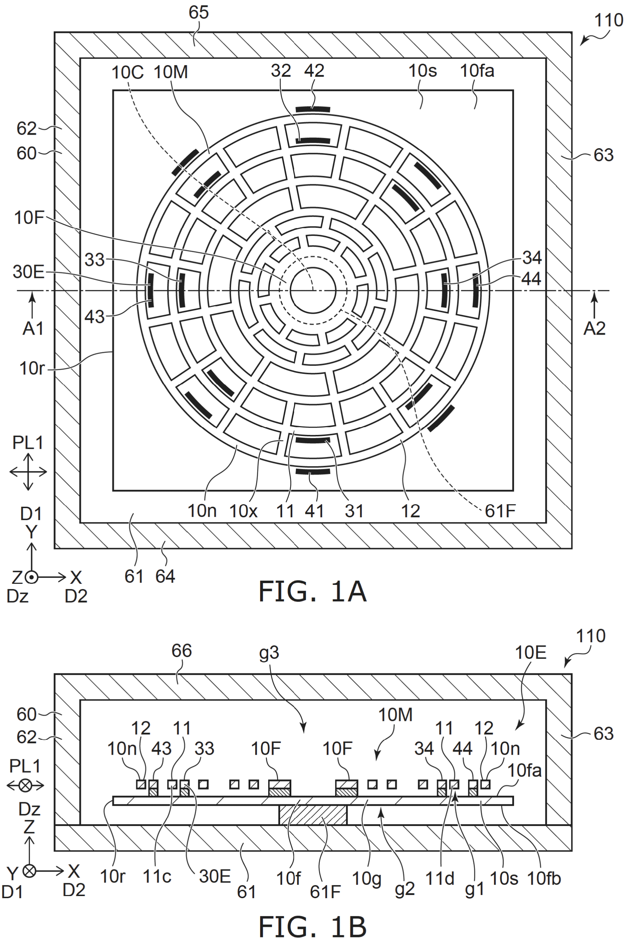

FIGS. 1A and 1B are schematic views illustrating a sensor according to the first embodiment.

FIG. 1A is a transparent plan view. FIG. 1B is a cross-sectional view taken along the A1-A2 in FIG. 1A.

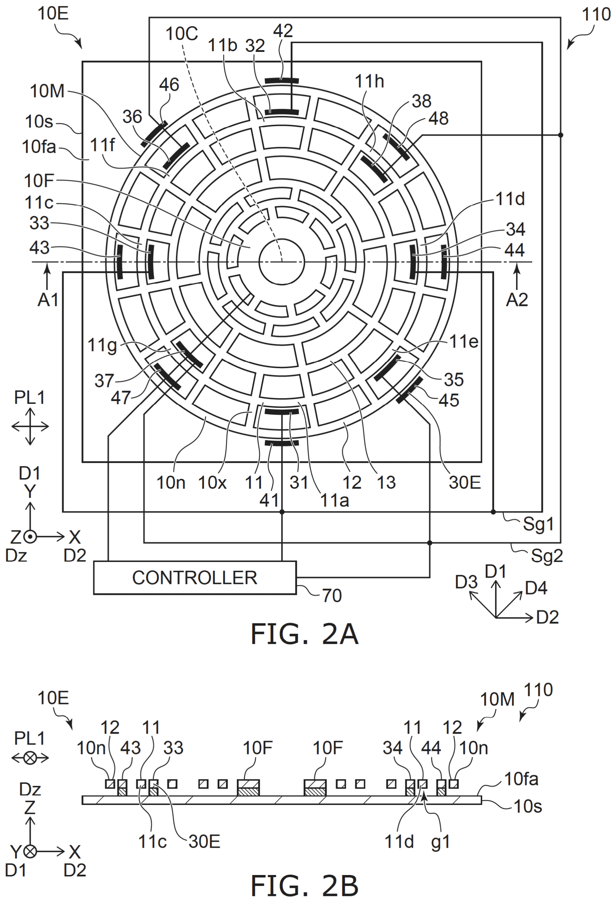

FIGS. 2A and 2B are schematic diagrams illustrating a part of the sensor according to the first embodiment.

FIG. 2A is a plan view. FIG. 2B is a cross-sectional view taken along the line A1-A2 in FIG. 2A.

As shown in FIGS. 1A and 1B, a sensor 110 according to the embodiment includes a first structure 60, an element section 10E, and a first fixing member 61F.

The first structure 60 includes a first member region 61. In this example, the first structure 60 is a housing. The first member region 61 corresponds to a part of the housing.

The element section 10E includes a base 10s, a fixed portion 10F, a movable portion 10M, and a fixed electrode 30E. The base 10s includes a first base face 10fa. The fixed portion 10F is fixed to the first base face 10fa. The movable portion 10M is supported by the fixed portion 10F. A first gap g1 is provided between the first base face 10fa and the movable portion 10M.

For example, the movable portion 10M includes a first annular portion 11. The first annular portion 11 is provided around the fixed portion 10F on a first plane PL1 along the first base face 10fa. The element section 10E may include a plurality of annular portions 10n. The first annular portion 11 is one of the plurality of annular portions 10n. The movable portion 10M is conductive.

The fixed electrode 30E is fixed to the first base face 10fa and faces the movable portion 10M. For example, the fixed electrode 30E faces the first annular portion 11 (a part of the plurality of annular portions 10n). A direction from the fixed electrode 30E to the movable portion 10M is along the first plane PL1.

The first fixing member 61F fixes the base 10s to the first member region 61. The first fixing member 61F may be, for example, a joining member or an adhesive member.

The base 10s is located between the first member region 61 and the fixed portion 10F. The first fixing member 61F is located between the first member region 61 and the base 10s.

For example, the base 10s includes a second base face 10fb. The first base face 10fa and the second base face 10fb are along the first plane PL1. The second base face 10fb is between the first member region 61 and the first base face 10fa in the stacking direction Dz. The second base face 10fb is, for example, the lower face (rear face). The first base face 10fa is, for example, the upper face. The first fixing member 61F is between the first member region 61 and the second base face 10fb.

The stacking direction Dz from the first member region 61 to the base 10s is defined as a Z-axis direction. One direction perpendicular to the Z-axis direction is defined as an X-axis direction. A direction perpendicular to the Z-axis direction and the X-axis direction is defined as a Y-axis direction. The first plane PL1 corresponds to the X-Y plane.

The first fixing member 61F overlaps the fixed portion 10F in the stacking direction Dz from the first member region 61 to the base 10s. The first fixing member 61F does not overlap the movable portion 10M in the stacking direction Dz.

As described below, a signal obtained from an electric circuit including the movable portion 10M corresponds to the angular velocity applied to the element section 10E. For example, the angular velocity can be detected by processing the signal. The sensor 110 may function as an angular velocity sensor, for example.

For example, an AC voltage may be applied between the movable portion 10M and the fixed electrode 30E. This causes the movable portion 10M to vibrate. The vibration state changes according to the angular velocity applied to the element section 10E. The angular velocity may be detected by detecting the change in the vibration state.

In the embodiment, the base 10s is fixed to the first structure 60 by the first fixing member 61F in a region corresponding to the fixed portion 10F. This provides a more stable detection result.

For example, there is a first reference example in which the outer edge 10r of the base 10s is fixed to the first member region 61 by a fixing member. In the first reference example, for example, stress may occur in the base 10s due to a difference in the thermal expansion coefficient between the base 10s and the first member region 61. Or, the fixing member may deform due to a change over time, and stress may occur in the base 10s due to the deformation. In the first reference example, for example, the distance between the movable portion 10M and the fixed electrode 30E is likely to change unintentionally due to stress applied to the base 10s. This may cause the vibration state to become unstable unintentionally. Or, even if there is no unintentional change in the vibration state, the detection characteristics of the vibration state may change. For this reason, the accuracy of the detection result is insufficient in the first reference example.

In the embodiment, as described above, the base 10s is fixed to the first structure 60 in a region corresponding to the fixed portion 10F that supports the movable portion 10M. As a result, even if a difference in thermal expansion coefficient or a change over time occurs, substantially no stress is generated in the base 10s. For example, the influence of an unintended change in the distance between the movable portion 10M and the fixed electrode 30E is suppressed. In the embodiment, a stable detection result is obtained. Highly accurate detection is stably possible. In the embodiment, a sensor capable of improving characteristics can be provided.

As shown in FIG. 1B, for example, the base 10s includes a fixed region 10f and a non-fixed region 10g. The first fixing member 61F is between the first member region 61 and the fixed region 10f. A second gap g2 is provided between the first member region 61 and the non-fixed region 10g. The non-fixed region 10g does not overlap the fixed portion 10F in the stacking direction Dz.

The base 10s includes an outer edge 10r on the first plane PL1. The outer edge 10r is separated from the first member region 61. No other fixing members are provided between the first member region 61 and the outer edge 10r. For example, the base 10s is fixed to the first member region 61 only by the first fixing member 61F, and is not fixed by other fixing members.

As shown in FIGS. 1A and 1B, the first structure 60 may include, in addition to the first member region 61, a second member region 62, a third member region 63, a fourth member region 64, a fifth member region 65, and a sixth member region 66.

The element section 10E is provided between the first member region 61 and the sixth member region 66 in the stacking direction Dz. The second member region 62, the third member region 63, the fourth member region 64, and the fifth member region 65 are connected to the first member region 61 and the sixth member region 66. The element section 10E is between the second member region 62 and the third member region 63 in one direction along the first plane PL1. The element section 10E is between the fourth member region 64 and the fifth member region 65 in another direction along the first plane PL1. A direction from the second member region 62 to the third member region 63 crosses a direction from the fourth member region 64 to the fifth member region 65. The second member region 62, the third member region 63, the fourth member region 64, and the fifth member region 65 are, for example, side portions.

The element section 10E is provided in a space surrounded by these plurality of member regions. This space may be reduced in pressure. This space may be filled with an inert gas or the like. Stable detection results are easily obtained.

As shown in FIG. 1B, a third gap g3 may be provided between the element section 10E (such as the movable portion 10M) and the sixth member region 66.

In this example, the movable portion 10M includes the plurality of annular portions 10n. The plurality of annular portions 10n are provided around the fixed portion 10F on the first plane PL1. The plurality of annular portions 10n are concentric around the fixed portion center 10C on the first plane PL1 of the fixed portion 10F. The movable portion 10M may include a radial portion 10x. The radial portion 10x is connected to the fixed portion 10F. The radial portion 10x extends along a radial direction. The radial direction is a direction that passes through the fixed portion center 10C and is along the first base face 10fa. The plurality of annular portions 10n (such as the first annular portion 11) are connected to the radial portion 10x.

The fixed portion center 10C overlaps the first fixing member 61F in the stacking direction Dz.

As shown in FIG. 2A, in this example, the plurality of annular portions 10n include the first annular portion 11, a second annular portion 12, and a third annular portion 13. In this example, the first annular portion 11 is between the fixed portion 10F and the other annular portions 10n. The position (order) of the first annular portion 11 in the plurality of annular portions 10n may be arbitrary.

The first annular portion 11 may include plurality of partial regions. For example, the first annular portion 11 may include a first partial region 11a, a second partial region 11b, a third partial region 11c, and a fourth partial region 11d.

The fixed electrode 30E includes a first electrode 31, a second electrode 32, a third electrode 33, and a fourth electrode 34. The first electrode 31 is fixed to the first base face 10fa and faces the first partial region 11a. The second electrode 32 is fixed to the first base face 10fa and faces the second partial region 11b. The third electrode 33 is fixed to the first base face 10fa and faces the third partial region 11c. The fourth electrode 34 is fixed to the first base face 10fa and faces the fourth partial region 11d.

A first direction D1 from the first electrode 31 to the second electrode 32 crosses a second direction D2 from the third electrode 33 to the fourth electrode 34. In this example, the angle (first angle) between the first direction D1 and the second direction D2 is substantially 90 degrees. The first angle may be, for example, not less than 85 degrees and not more than 95 degrees. The stacking direction Dz crosses a plane including the first direction D1 and the second direction D2.

As shown in FIG. 2A, the first partial region 11a is between the first electrode 31 and the fixed portion 10F in the first direction D1. The second partial region 11b is between the fixed portion 10F and the second electrode 32 in the first direction D1. The third electrode 33 is between the third partial region 11c and the fixed portion 10F in the second direction D2. The fourth electrode 34 is between the fixed portion 10F and the fourth partial region 11d in the second direction D2.

For example, the first electrode 31 and the second electrode 32 are located outside the first annular portion 11. The third electrode 33 and the fourth electrode 34 are located inside the first annular portion 11.

The first electrode 31, the second electrode 32, the third electrode 33, and the fourth electrode 34 are configured to receive the same signal (e.g., a first signal). For example, the first electrode 31, the second electrode 32, the third electrode 33, and the fourth electrode 34 may be electrically connected to each other.

The above signal may be supplied from the controller 70. The controller 70 may be included in the sensor 110. The controller 70 may be provided separately from the sensor 110. In a first operation, the controller 70 is configured to apply a first signal (e.g., a first AC signal Sg1) between the first electrode 31 and the movable portion 10M, between the second electrode 32 and the movable portion 10M, between the third electrode 33 and the movable portion 10M, and between the fourth electrode 34 and the movable portion 10M. The first electrode 31, the second electrode 32, the third electrode 33, and the fourth electrode 34 are, for example, driving electrodes.

The first AC signal Sg1 causes deformation (e.g., vibration) in the movable portion 10M. As described above, the first electrode 31 and the second electrode 32 are located on the outside of the first annular portion 11. The third electrode 33 and the fourth electrode 34 are located on the inside of the first annular portion 11. By employing plurality of electrodes in this configuration, more accurate detection results can be obtained.

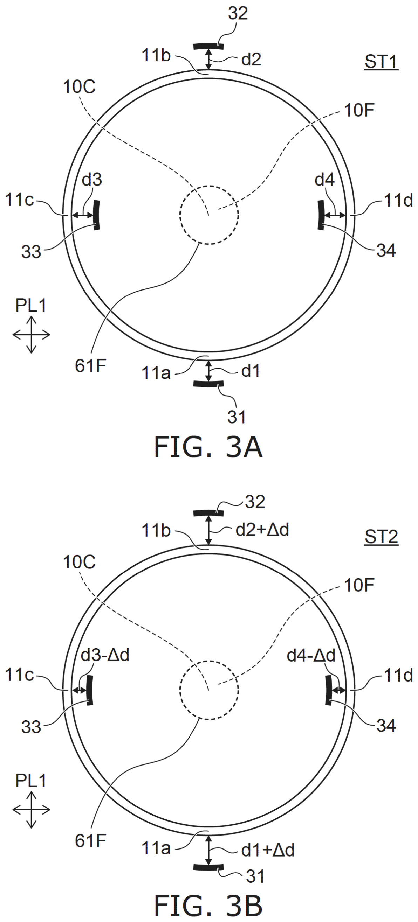

FIGS. 3A and 3B are schematic diagrams illustrating the operation of the sensor according to the first embodiment.

As shown in FIG.3A, a distance between the first electrode 31 and the first partial region 11a is defined as a distance d1. A distance between the second electrode 32 and the second partial region 11b is defined as a distance d2. A distance between the third electrode 33 and the third partial region 11c is defined as a distance d3. A distance between the fourth electrode 34 and the fourth partial region 11d is defined as a distance d4. In a first state ST1, these distances are the same.

As shown in FIG. 3B, in a second state ST2, the relative position between the first annular portion 11 and the electrodes has changed due to unintended stress or the like. In the embodiment, the first fixing member 61F overlaps the fixed portion center 10C of the fixed portion 10F. Therefore, even if deformation occurs due to unintended stress or the like, the deformation is isotropic with respect to an axis passing through the fixed portion center 10C.

For example, the distance between the first electrode 31 and the first partial region 11a is "d1+Δd". The distance between the second electrode 32 and the second partial region 11b is "d2+Δd". The distance between the third electrode 33 and the third partial region 11c is "d3-Δd". The distance between the fourth electrode 34 and the fourth partial region 11d is "d4-Δd". The isotropic deformation in one axis cancels out the fluctuation in capacitance, and no practical problems arise. High accuracy of detection can be maintained. For example, the fluctuation in the total capacitance between the plurality of electrodes and the movable portion is suppressed.

On the other hand, for example, in a first reference example in which the outer edge 10r is fixed, the deformation is anisotropic. Therefore, the deformation reduces the vibration state or the accuracy of the detection of the vibration state.

When the same signal (e.g., the first signal) is input to the first electrode 31, the second electrode 32, the third electrode 33, and the fourth electrode 34, the first annular portion 11 of the movable portion 10M and the like vibrate. The first state ST1 in FIG. 3A corresponds to a state in which no signal is supplied. The second state ST2 illustrated in FIG. 3B may also correspond to a state of vibration at one time when there is no unintended deformation or the like.

As shown in FIG. 3B, at one time, the movable portion 10M deforms such that the first partial region 11a and the second partial region 11b expand outward. At this time, the movable portion 10M deforms such that the third partial region 11c and the fourth partial region 11d contract inward. At another time, the opposite deformation state occurs.

By supplying the first AC signal Sg1 to these electrodes, the high-frequency vibration mode in the vibration of the movable portion 10M is suppressed with a simple configuration. By suppressing the high-frequency vibration mode, stable detection can be performed with high accuracy over a wide band. For example, a sensor capable of wideband detection can be provided.

In the embodiment, when the distance (first distance) between the first partial region 11a and the second partial region 11b increases, the distance (second distance) between the third partial region 11c and the fourth partial region 11d decreases. When the first distance decreases, the second distance increases. For example, a simple configuration suppresses vibration modes at high frequencies.

The vibration state of the first annular portion 11 (movable portion 10M) changes, for example, according to the angular velocity applied to the element section 10E. For example, the angular velocity can be detected by detecting the change in the vibration state of the first annular portion 11. The change in the vibration state according to the angular velocity may be based on, for example, the Coriolis force.

In the embodiment, the change in the vibration state of the first annular portion 11 (movable portion 10M) may be detected, for example, by detecting a change in at least one of the optical characteristics, the magnetic characteristics, and the electrical characteristics. For example, the vibration state of the first annular portion 11 (movable portion 10M) may be detected by detecting a change in the state of reflected light on the movable portion 10M.

Below, an example will be according to which the detection electrodes detect a change in the vibration state of the first annular portion 11 (movable portion 10M).

As shown in FIG. 2A, in the element section 10E, the fixed electrode 30E may include a first detection electrode 41, a second detection electrode 42, a third detection electrode 43, and a fourth detection electrode 44. The first detection electrode 41 is fixed to the first base face 10fa and faces the movable portion 10M. The second detection electrode 42 is fixed to the first base face 10fa and faces the movable portion 10M. The third detection electrode 43 is fixed to the first base face 10fa and faces the movable portion 10M. The fourth detection electrode 44 is fixed to the first base face 10fa and faces the movable portion 10M.

A direction from the first detection electrode 41 to the second detection electrode 42 (first detection direction) crosses a direction from the third detection electrode 43 to the fourth detection electrode 44 (second detection direction). For example, the first detection direction may be along the first direction D1. The second detection direction may be along the second direction D2.

The vibration of the movable portion 10M generates electrical signals in these detection electrodes. The electrical signals correspond to a change in capacitance between the movable portion 10M and these detection electrodes. The electrical signals may be detected by the controller 70.

The controller 70 may be configured to detect the angular velocity acting on the element section 10E based on information including, for example, a first detection signal obtained between the first detection electrode 41 and the movable portion 10M, a second detection signal obtained between the second detection electrode 42 and the movable portion 10M, a third detection signal obtained between the third detection electrode 43 and the movable portion 10M, and a fourth detection signal obtained between the fourth detection electrode 44 and the movable portion 10M.

In this example, the movable portion 10M further includes the second annular portion 12. The second annular portion 12 is concentric with the first annular portion 11, centered on the fixed portion center 10C in the first plane PL1 of the fixed portion 10F. The second annular portion 12 may be on the outside or inside of the first annular portion 11. In this example, the first annular portion 11 is between the fixed portion 10F and the second annular portion 12. In this example, the first detection electrode 41, the second detection electrode 42, the third detection electrode 43, and the fourth detection electrode 44 face the second annular portion 12. The annular portion 10n to which these electrodes face may be considered to be the second annular portion 12.

As shown in FIG. 2A, the first annular portion 11 may include a fifth partial region 11e, a sixth partial region 11f, a seventh partial region 11g, and an eighth partial region 11h. The element section 10E may include a fifth electrode 35, a sixth electrode 36, a seventh electrode 37, and an eighth electrode 38. The fifth electrode 35 is fixed to the first base face 10fa and faces the fifth partial region 11e. The sixth electrode 36 is fixed to the first base face 10fa and faces the sixth partial region 11f. The seventh electrode 37 is fixed to the first base face 10fa and faces the seventh partial region 11g. The eighth electrode 38 is fixed to the first base face 10fa and faces the eighth partial region 11h.

A third direction D3 from the fifth electrode 35 to the sixth electrode 36 crosses a fourth direction D4 from the seventh electrode 37 to the eighth electrode 38. The third direction D3 is inclined with respect to the first direction D1.

The fifth partial region 11e is between the fifth electrode 35 and the fixed portion 10F in the third direction D3. The sixth partial region 11f is between the fixed portion 10F and the sixth electrode 36 in the third direction D3. The seventh electrode 37 is between the seventh partial region 11g and the fixed portion 10F in the fourth direction D4. The eighth electrode 38 is between the fixed portion 10F and the eighth partial region 11h in the fourth direction D4.

For example, the fifth electrode 35 and the sixth electrode 36 are on the outside of the first annular portion 11. The seventh electrode 37 and the eighth electrode 38 are located inside the first annular portion 11 .

The fifth electrode 35, the sixth electrode 36, the seventh electrode 37, and the eighth electrode 38 are configured to receive the same signal (second signal). The fifth electrode 35, the sixth electrode 36, the seventh electrode 37, and the eighth electrode 38 are, for example, electrically connected to each other.

The fifth electrode 35, the sixth electrode 36, the seventh electrode 37, and the eighth electrode 38 provide vibrations in a direction different from the vibrations provided by the first electrode 31, the second electrode 32, the third electrode 33, and the fourth electrode 34. Information regarding angular velocity may be obtained by the vibrations in two different directions.

For example, the angle (second angle) between the third direction D3 and the fourth direction D4 may be substantially 90 degrees. The second angle may be, for example, not less than 85 degrees and not more than 95 degrees.

For example, the angle between the third direction D3 and the first direction D1 may be substantially 45 degrees. The rotation angle can be detected with higher accuracy. This angle may be not less than 40 degrees and not more than 50 degrees.

Even in the vibration caused by the fifth electrode 35, the sixth electrode 36, the seventh electrode 37, and the eighth electrode 38, the vibration mode at high frequencies is suppressed. A wide bandwidth is possible with a simple configuration.

In a second operation, the controller 70 is configured to apply a second AC signal Sg2 between the fifth electrode 35 and the movable portion 10M, between the sixth electrode 36 and the movable portion 10M, between the seventh electrode 37 and the movable portion 10M, and between the eighth electrode 38 and the movable portion 10M. The second AC signal Sg2 causes the movable portion 10M to vibrate.

As shown in FIG. 2A, the element section 10E may further include a fifth detection electrode 45, a sixth detection electrode 46, a seventh detection electrode 47, and an eighth detection electrode 48. The fifth detection electrode 45 is fixed to the first base face 10fa and faces the movable portion 10M. The sixth detection electrode 46 is fixed to the first base face 10fa and faces the movable portion 10M. The seventh detection electrode 47 is fixed to the first base face 10fa and faces the movable portion 10M. The eighth detection electrode 48 is fixed to the first base face 10fa and faces the movable portion 10M.

In this example, the fifth detection electrode 45, the sixth detection electrode 46, the seventh detection electrode 47, and the eighth detection electrode 48 face the second annular portion 12.

A direction from the fifth detection electrode 45 to the sixth detection electrode 46 (third detection direction) crosses a direction from the seventh detection electrode 47 to the eighth detection electrode 48 (fourth detection direction). The third detection direction is along, for example, the third direction D3. The fourth detection direction is along the fourth direction D4.

The controller 70 may be configured to detect the angular velocity acting on the element section 10E based on information including the above-mentioned first to fourth detection signals, the fifth detection signal obtained between the fifth detection electrode 45 and the movable portion 10M, the sixth detection signal obtained between the sixth detection electrode 46 and the movable portion 10M, the seventh detection signal obtained between the seventh detection electrode 47 and the movable portion 10M, and the eighth detection signal obtained between the eighth detection electrode 48 and the movable portion 10M.

In the embodiment, the first detection electrode 41, the second detection electrode 42, the third detection electrode 43, and the fourth detection electrode 44 may be located on the outside or inside of the movable portion 10M (e.g., the second annular portion 12) to which the first detection electrode 41, the second detection electrode 42, the third detection electrode 43, and the fourth detection electrode 44 face.

In the embodiment, the fifth detection electrode 45, the sixth detection electrode 46, the seventh detection electrode 47, and the eighth detection electrode 48 may be located on the outside or inside with respect to the movable portion 10M (e.g., the second annular portion 12) to which the fifth detection electrode 45, the sixth detection electrode 46, the seventh detection electrode 47, and the eighth detection electrode 48 face.

As already explained, the movable portion 10M may further include the third annular portion 13. The third annular portion 13 is concentric with the first annular portion 11, centered on the fixed portion center 10C in the first plane PL1 of the fixed portion 10F. In this example, the third annular portion 13 is between the fixed portion 10F and the first annular portion 11.

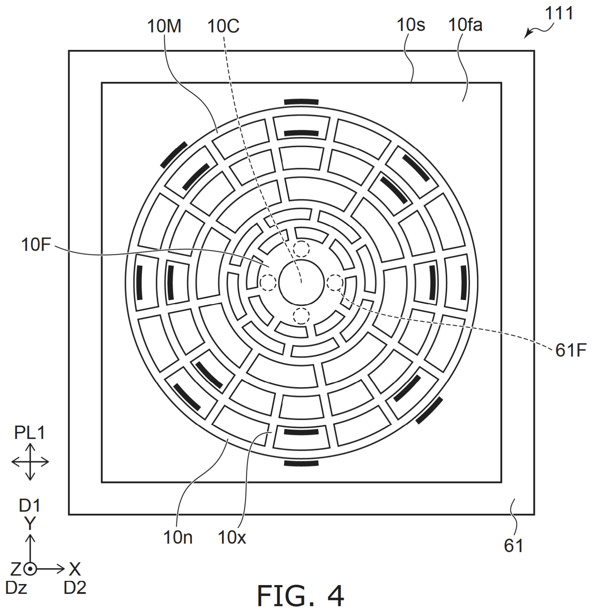

FIG. 4 is a schematic plan view illustrating a part of a sensor according to the first embodiment.

As shown in FIG. 4, in a sensor 111 according to the embodiment, a plurality of first fixing members 61F are provided. Except for this, the configuration of the sensor 111 may be the same as the configuration of the sensor 110. In the sensor 111, the plurality of first fixing members 61F are between the first member region 61 and the base 10s. The plurality of first fixing members 61F overlap the fixed portion 10F in the stacking direction Dz. The plurality of first fixing members 61F do not overlap the movable portion 10M in the stacking direction Dz. The plurality of first fixing members 61F do not overlap the plurality of annular portions 10n in the stacking direction Dz. Highly accurate detection results can also be obtained stably in the sensor 111.

In the sensors 110 and 111, the fixed portion 10F is annular. In the embodiment, the planar shape of the fixed portion 10F is arbitrary.

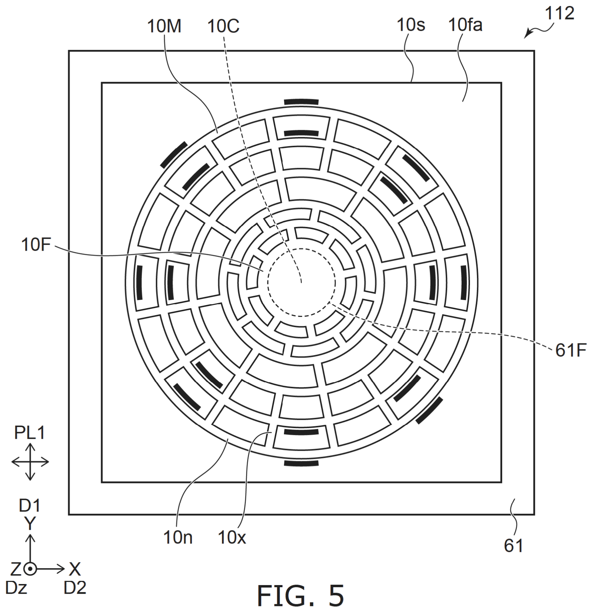

FIG. 5 is a schematic plan view illustrating a part of a sensor according to the first embodiment.

As shown in FIG. 5, in a sensor 112 according to the embodiment, the fixed portion 10F is circular. Except for this, the configuration of the sensor 112 may be the same as the configuration of the sensor 110 or the sensor 111. In the sensor 112, the first fixing member 61F is also between the first member region 61 and the base 10s. The first fixing member 61F overlaps the fixed portion 10F in the stacking direction Dz. The first fixing member 61F does not overlap the movable portion 10M in the stacking direction Dz. In the sensor 112, detection results with high accuracy can also be stably obtained.

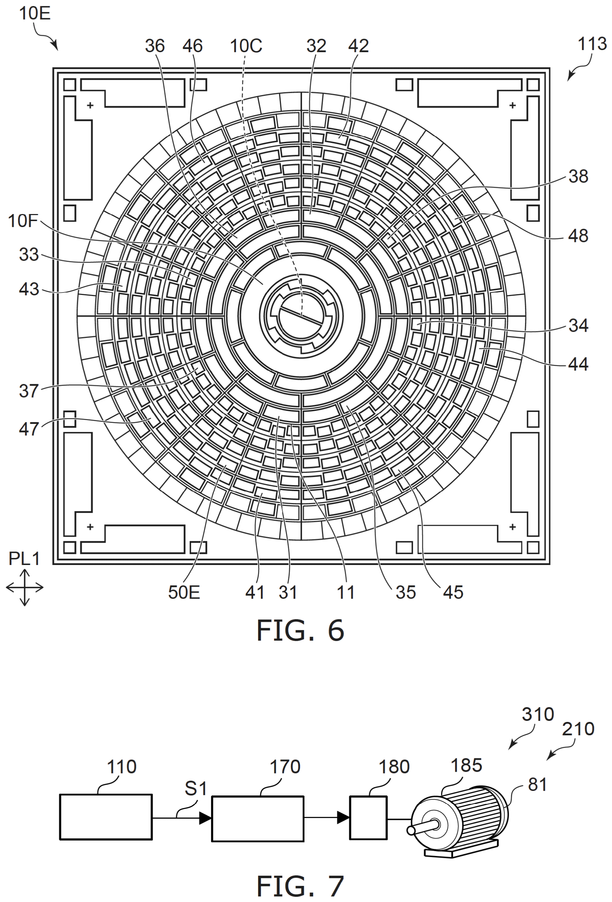

FIG. 6 is a schematic plan view illustrating a sensor according to the first embodiment.

As shown in FIG. 6, in a sensor 113 according to the embodiment, the element section 10E may further include other electrodes 50E, etc. The other electrode 50E is fixed to the first base face 10fa. The other electrode 50E may be a part of the fixed electrode 30E. The electrode 50E may be used for adjustment.

### (Second Embodiment)

The second embodiment relates to an electronic device.

FIG. 7 is a schematic diagram illustrating an electronic device according to a second embodiment.

As shown in FIG. 7, an electronic device 310 according to the embodiment includes the sensor according to the first embodiment and a circuit controller 170. In the example of FIG. 7, the sensor 110 is illustrated as the sensor. The circuit controller 170 is configured to control a circuit 180 based on a detected signal S0 obtained from the sensor. The circuit 180 is, for example, a control circuit of a driving device 185 or the like. According to the embodiment, for example, the circuit 180 for controlling the driving device 185 can be controlled with high accuracy.

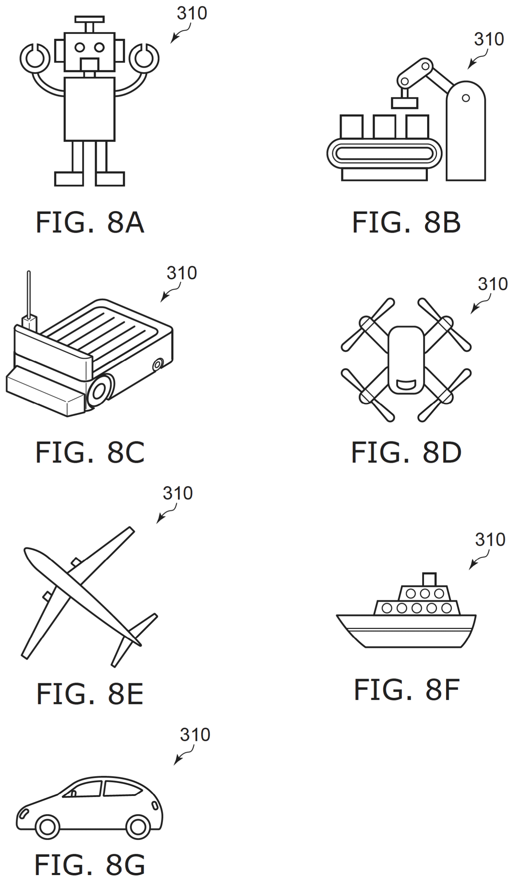

FIGS. 8A to 8G are schematic diagrams illustrating applications of the electronic device according to the embodiment.

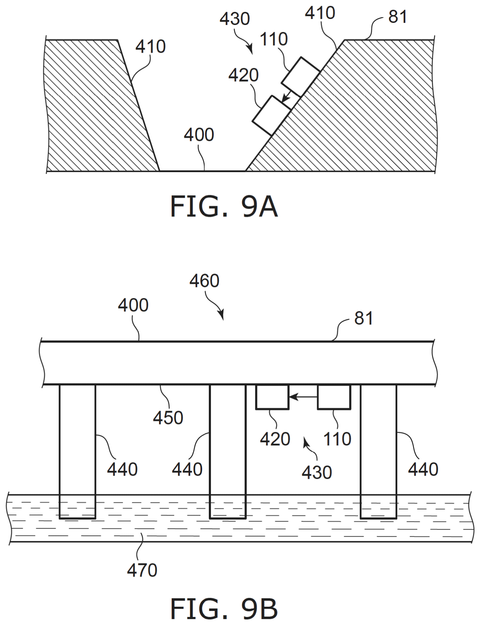

As shown in FIG. 9A, the electronic device 310 may be at least a part of a robot. As shown in FIG. 8B, the electronic device 310 may be at least a part of a work robot provided in a manufacturing factory or the like. As shown in FIG. 8C, the electronic device 310 may be at least a part of an automated guided vehicle such as in a factory. As shown in FIG. 8D, the electronic device 310 may be at least a part of a drone (unmanned aerial vehicle). As shown in FIG. 8E, the electronic device 310 may be at least a part of an airplane. As shown in FIG. 8F, the electronic device 310 may be at least a part of a vessel. As shown in FIG. 8G, the electronic device 310 may be at least a part of an automobile. The electronic device 310 may include, for example, at least one of a robot or a mobile object.

FIGS. 9A and 9B are schematic diagrams illustrating applications of the sensor according to the embodiment.

As shown in FIG. 9A, a sensor 430 according to the embodiment includes the sensor according to the first embodiment and a transmitter/receiver 420. In the example of FIG. 9A, the sensor 110 is drawn as the sensor. The transmitter/receiver 420 is configured to transmit the signal obtained from the sensor 110 by at least one of wireless or wired methods, for example. The sensor 430 is provided, for example, on a slope face 410 such as a road 400. The sensor 430 may, for example, monitor conditions such as facilities (e.g., infrastructure). The sensor 430 may be, for example, a condition monitoring device.

For example, the sensor 430 detects changes in the state of the slope face 410 of the road 400 with high accuracy. A change in the state of the slope face 410 includes, for example, at least one of a change in tilt angle or a change in vibration state. The signal (test result) obtained from the sensor 110 is transmitted by the transmitter/receiver 420. The condition of facilities (e.g., infrastructure) can be monitored, e.g., continuously.

As shown in FIG. 9B, the sensor 430 is provided on a part of a bridge 460, for example. The bridge 460 is provided over a river 470. For example, the bridge 460 includes at least one of main girder 450 and a bridge pier 440. The sensor 430 is provided on at least one of the main girder 450 and the bridge pier 440. For example, the angle of at least one of the main girder 450 and the bridge pier 440 may change due to deterioration or the like. For example, in at least one of the main girder 450 and the bridge pier 440, the vibration state may change. The sensor 430 detects these changes with high accuracy. A detection result can be transmitted to an arbitrary place by the transmitter/receiver 420. Anomalies can be effectively detected.

The embodiments include the following Technical proposals:

### (Technical proposal 1)

A sensor, comprising:
a first structure including a first member region;
an element section, the element section including:
   a base including a first base face,
   a fixed portion fixed to the first base face,
   a movable portion supported by the fixed portion, a first gap being provided between the first base face and the movable portion, the movable portion including a first annular portion provided around the fixed portion in a first plane along the first base face, and
   a fixed electrode fixed to the first base face and facing the movable portion; and
a first fixing member fixing the base to the first member region,
the base being between the first member region and the fixed portion,
the first fixing member being between the first member region and the base,
the first fixing member overlapping the fixed portion in a stacking direction from the first member region to the base,
the first fixing member not overlapping the movable portion in the stacking direction.

### (Technical proposal 2)

The sensor according to Technical proposal 1, wherein
the base includes a fixed region and a non-fixed region,
the first fixing member is between the first member region and the fixed region, and
a second gap is provided between the first member region and the non-fixed region.

### (Technical proposal 3)

The sensor according to Technical proposal 1 or 2, wherein
the base includes an outer edge in the first plane,
the outer edge is spaced apart from the first member region, and
no other fixing member is provided between the first member region and the outer edge.

### (Technical proposal 4)

The sensor according to any one of Technical proposals 1 to 3, wherein
the first annular portion includes a first partial region, a second partial region, a third partial region, and a fourth partial region,
the fixed electrode includes:
   a first electrode fixed to the first base face and facing the first partial region,
   a second electrode fixed to the first base face and facing the second partial region,
   a third electrode fixed to the first base face and facing the third partial region, and
   a fourth electrode fixed to the first base face and facing the fourth partial region,
a first direction from the first electrode to the second electrode crosses a second direction from the third electrode to the fourth electrode,
the first partial region is between the first electrode and the fixed portion in the first direction,
the second partial region is between the fixed portion and the second electrode in the first direction,
the third electrode is between the third partial region and the fixed portion in the second direction, and
the fourth electrode is between the fixed portion and the fourth partial region in the second direction.

### (Technical proposal 5)

The sensor according to Technical proposal 4, wherein
the first angle between the first direction and the second direction is 90 degrees.

### (Technical proposal 6)

The sensor according to Technical proposal 4 or 5, wherein
the first electrode, the second electrode, the third electrode, and the fourth electrode are configured to receive a first signal.

### (Technical proposal 7)

The sensor according to any one of Technical proposals 4 to 6, further comprising:
a controller,
the controller being configured to apply a first AC signal between the first electrode and the movable portion, between the second electrode and the movable portion, between the third electrode and the movable portion, and between the fourth electrode and the movable portion in a first operation.

### (Technical proposal 8)

The sensor according to Technical proposal 7, wherein
when a first distance between the first partial region and the second partial region increases, a second distance between the third partial region and the fourth partial region decreases, and
when the first distance decreases, the second distance increases.

### (Technical proposal 9)

The sensor according to Technical proposal 7, wherein
a vibration state of the first annular portion changes according to an angular velocity applied to the element section.

### (Technical proposal 10)

The sensor according to Technical proposal 7, wherein
the fixed electrode further include:
   a first detection electrode fixed to the first base face and facing the movable portion,
   a second detection electrode fixed to the first base face and facing the movable portion,
   a third detection electrode fixed to the first base face and facing the movable portion, and
   a fourth detection electrode fixed to the first base face and facing the movable portion,
a first detection direction from the first detection electrode to the second detection electrode crosses a second detection direction from the third detection electrode to the fourth detection electrode.

### (Technical proposal 11)

The sensor according to Technical proposal 10, wherein
the first detection direction is along the first direction, and
the second detection direction is along the second direction.

### (Technical proposal 12)

The sensor according to Technical proposal 11, wherein
the controller is configured to detect an angular velocity acting on the element section based on information including:
a first detection signal obtained between the first detection electrode and the movable portion,
a second detection signal obtained between the second detection electrode and the movable portion,
a third detection signal obtained between the third detection electrode and the movable portion, and
a fourth detection signal obtained between the fourth detection electrode and the movable portion.

### (Technical proposal 13)

The sensor according to any one of Technical proposals 10 to 12, wherein
the movable portion further includes a second annular portion,
the second annular portion is concentric with the first annular portion around the center of the fixed portion in the first plane of the fixed portion, and
the first detection electrode, the second detection electrode, the third detection electrode, and the fourth detection electrode face the second annular portion.

### (Technical proposal 14)

The sensor according to Technical proposal 12, wherein
the first annular portion includes a fifth partial region, a sixth partial region, a seventh partial region, and an eighth partial region,
the fixed electrode includes:
   a fifth electrode fixed to the first base face and facing the fifth partial region,
   a sixth electrode fixed to the first base face and facing the sixth partial region,
   a seventh electrode fixed to the first base face and facing the seventh partial region, and
   an eighth electrode fixed to the first base face and facing the eighth partial region,
a third direction from the fifth electrode to the sixth electrode crosses a fourth direction from the seventh electrode to the eighth electrode,
the third direction is inclined with respect to the first direction,
the fifth partial region is between the fifth electrode and the fixed portion in the third direction,
the sixth partial region is between the fixed portion and the sixth electrode in the third direction,
the seventh electrode is between the seventh partial region and the fixed portion in the fourth direction,
the eighth electrode is between the fixed portion and the eighth partial region in the fourth direction, and
the fifth electrode, the sixth electrode, the seventh electrode and the eighth electrode are configured to receive a second signal.

### (Technical proposal 15)

The sensor according to Technical proposal 14, wherein
a second angle between the third direction and the fourth direction is 90 degrees.

### (Technical proposal 16)

The sensor according to Technical proposal 15, wherein
an angle between the third direction and the first direction is 45 degrees.

### (Technical proposal 17)

The sensor according to any one of Technical proposals 14 to 16, wherein
the controller is configured to apply a second AC signal between the fifth electrode and the movable portion, between the sixth electrode and the movable portion, between the seventh electrode and the movable portion, and between the eighth electrode and the movable portion in the second operation.

### (Technical proposal 18)

The sensor according to Technical proposal 10, wherein
the first detection electrode, the second detection electrode, the third detection electrode, and the fourth detection electrode are on outside or inside with respect to the movable portion to which the first detection electrode, the second detection electrode, the third detection electrode, and the fourth detection electrode face.

### (Technical proposal 19)

The sensor according to any one of Technical proposals 1 to 10, wherein
the fixed portion includes a fixed portion center on the first base face,
the movable portion includes a radial portion connected to the fixed portion,
the radial portion extends along a radial direction,
the radial direction passes through the fixed portion center and is along the first base face, and
the first annular portion is connected to the radial portion.

### (Technical proposal 20)

An electronic device comprising:
the sensor according to any one of Technical proposals 1 to 19; and
a circuit controller configured to control a circuit based on a signal obtained from the sensor.

According to the embodiment, it is possible to provide sensors and electronic devices that can improve their characteristics.

Hereinabove, exemplary embodiments of the invention are described with reference to specific examples. However, the embodiments of the invention are not limited to these specific examples. For example, one skilled in the art may similarly practice the invention by appropriately selecting specific configurations of components included in sensors such as structures, sensor sections, bases, fixed portions, movable portions, electrodes, controllers, etc., from known art. Such practice is included in the scope of the invention to the extent that similar effects thereto are obtained.

Further, any two or more components of the specific examples may be combined within the extent of technical feasibility and are included in the scope of the invention to the extent that the purport of the invention is included.

Moreover, all sensors and all electronic devices practicable by an appropriate design modification by one skilled in the art based on the sensors and the electronic devices described above as embodiments of the invention also are within the scope of the invention to the extent that the purport of the invention is included.

Various other variations and modifications can be conceived by those skilled in the art within the spirit of the invention, and it is understood that such variations and modifications are also encompassed within the scope of the invention.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions as defined by the appended claims.

## Claims

1. A sensor, comprising:
a first structure including a first member region;
an element section, the element section including:
a base including a first base face,
a fixed portion fixed to the first base face,
a movable portion supported by the fixed portion, a first gap being provided between the first base face and the movable portion, the movable portion including a first annular portion provided around the fixed portion in a first plane along the first base face, and
a fixed electrode fixed to the first base face and facing the movable portion; and
a first fixing member fixing the base to the first member region,
the base being between the first member region and the fixed portion,
the first fixing member being between the first member region and the base,
the first fixing member overlapping the fixed portion in a stacking direction from the first member region to the base,
the first fixing member not overlapping the movable portion in the stacking direction.

2. The sensor according to claim 1, wherein
the base includes a fixed region and a non-fixed region,
the first fixing member is between the first member region and the fixed region, and
a second gap is provided between the first member region and the non-fixed region.

3. The sensor according to claim 1 or 2, wherein
the base includes an outer edge in the first plane,
the outer edge is spaced apart from the first member region, and
no other fixing member is provided between the first member region and the outer edge.

4. The sensor according to any one of claims 1-3, wherein
the first annular portion includes a first partial region, a second partial region, a third partial region, and a fourth partial region,
the fixed electrode includes:
a first electrode fixed to the first base face and facing the first partial region,
a second electrode fixed to the first base face and facing the second partial region,
a third electrode fixed to the first base face and facing the third partial region, and
a fourth electrode fixed to the first base face and facing the fourth partial region,
a first direction from the first electrode to the second electrode crosses a second direction from the third electrode to the fourth electrode,
the first partial region is between the first electrode and the fixed portion in the first direction,
the second partial region is between the fixed portion and the second electrode in the first direction,
the third electrode is between the third partial region and the fixed portion in the second direction, and
the fourth electrode is between the fixed portion and the fourth partial region in the second direction.

5. The sensor according to claim 4, wherein
the first angle between the first direction and the second direction is 90 degrees.

6. The sensor according to claim 4 or 5, wherein
the first electrode, the second electrode, the third electrode, and the fourth electrode are configured to receive a first signal.

7. The sensor according to any one of claims 4-6, further comprising:
a controller,
the controller being configured to apply a first AC signal between the first electrode and the movable portion, between the second electrode and the movable portion, between the third electrode and the movable portion, and between the fourth electrode and the movable portion in a first operation.

8. The sensor according to claim 7, wherein
when a first distance between the first partial region and the second partial region increases, a second distance between the third partial region and the fourth partial region decreases, and
when the first distance decreases, the second distance increases.

9. The sensor according to claim 7, wherein
a vibration state of the first annular portion changes according to an angular velocity applied to the element section.

10. The sensor according to claim 7, wherein
the fixed electrode further include:
a first detection electrode fixed to the first base face and facing the movable portion,
a second detection electrode fixed to the first base face and facing the movable portion,
a third detection electrode fixed to the first base face and facing the movable portion, and
a fourth detection electrode fixed to the first base face and facing the movable portion,
a first detection direction from the first detection electrode to the second detection electrode crosses a second detection direction from the third detection electrode to the fourth detection electrode.

11. The sensor according to claim 10, wherein
the first detection direction is along the first direction, and
the second detection direction is along the second direction.

12. The sensor according to claim 11, wherein
the controller is configured to detect an angular velocity acting on the element section based on information including:
a first detection signal obtained between the first detection electrode and the movable portion,
a second detection signal obtained between the second detection electrode and the movable portion,
a third detection signal obtained between the third detection electrode and the movable portion, and
a fourth detection signal obtained between the fourth detection electrode and the movable portion.

13. The sensor according to any one of claims 10-12, wherein
the movable portion further includes a second annular portion,
the second annular portion is concentric with the first annular portion around the center of the fixed portion in the first plane of the fixed portion, and
the first detection electrode, the second detection electrode, the third detection electrode, and the fourth detection electrode face the second annular portion.

14. The sensor according to claim 12, wherein
the first annular portion includes a fifth partial region, a sixth partial region, a seventh partial region, and an eighth partial region,
the fixed electrode includes:
a fifth electrode fixed to the first base face and facing the fifth partial region,
a sixth electrode fixed to the first base face and facing the sixth partial region,
a seventh electrode fixed to the first base face and facing the seventh partial region, and
an eighth electrode fixed to the first base face and facing the eighth partial region,
a third direction from the fifth electrode to the sixth electrode crosses a fourth direction from the seventh electrode to the eighth electrode,
the third direction is inclined with respect to the first direction,
the fifth partial region is between the fifth electrode and the fixed portion in the third direction,
the sixth partial region is between the fixed portion and the sixth electrode in the third direction,
the seventh electrode is between the seventh partial region and the fixed portion in the fourth direction,
the eighth electrode is between the fixed portion and the eighth partial region in the fourth direction, and
the fifth electrode, the sixth electrode, the seventh electrode and the eighth electrode are configured to receive a second signal.

15. An electronic device comprising:
the sensor according to any one of claims 1-14; and
a circuit controller configured to control a circuit based on a signal obtained from the sensor.
